# EUROPÄISCHE PATENTANMELDUNG

(11) **EP 2 501 080 A1**
(43) Veröffentlichungstag der Anmeldung: **19.09.2012**
(21) Anmeldenummer: 11158074.2
(22) Anmeldetag: 14.03.2011
(51) Int. Cl.: H04L 12/437, H04L 12/46

(54) **Verfahren zum Erhöhen der Verfügbarkeit eines Kommunikationsnetzwerks**

(71) Anmelder: SIEMENS AKTIENGESELLSCHAFT, 80333 München (DE)
(72) Erfinder: Feix, Rudolf, 76131 Karlsruhe (DE)

(57) **Zusammenfassung**

Verfahren zum Erhöhen der Verfügbarkeit eines Kommunikationsnetzwerks

Die Erfindung beschreibt ein Verfahren zum Erhöhen der Verfügbarkeit eines Kommunikationsnetzwerks, in dem eine Anzahl an Kopplungselementen (SW1, ..., SW5) über jeweilige Koppelports (P) physikalisch miteinander verbunden ist. Die Anzahl an Kopplungselementen (SW1, ..., SW5) ist dazu ausgebildet, an einem Redundanzverfahren zur Übertragung von Daten teilzunehmen. Die Kopplungselemente (SW1, ..., SW5) nehmen eine Überprüfung vor, ob über ihre Koppelports (P) gesendete und/oder empfangene Telegramme einen die Telegrammübertragung betreffenden Fehler aufweisen oder ob der Betrieb der Koppelelemente (SW1, ..., SW5) einen Fehler umfasst. Die Kopplungselemente (SW1, ..., SW5) deaktivieren beim Vorliegen eines Kriteriums für den Fehler einen der Koppelports (P) selbsttätig, wodurch das Redundanzverfahren für die Übertragung von Daten aktiviert wird und die weitere Übertragung von Telegrammen in dem Kommunikationsnetzwerk über einen Redundanzpfad erfolgt.

## Beschreibung

Verfahren zum Erhöhen der Verfügbarkeit eines Kommunikationsnetzwerks

Die Erfindung betrifft ein Verfahren zum Erhöhen der Verfügbarkeit eines Kommunikationsnetzwerks, in dem eine Anzahl an Kopplungselementen über jeweilige Koppelports physikalisch miteinander verbunden ist, wobei die Anzahl an Kopplungselementen dazu ausgebildet ist, an einem Redundanzverfahren zur Übertragung von Daten teilzunehmen.

Um in Kommunikationsnetzwerken eine hohe Verfügbarkeit sicherstellen zu können, werden diese redundant ausgelegt. Für auf Ethernet basierenden Kommunikationsnetzwerken werden Kopplungselemente hierzu beispielsweise in einer Ring-Topologie physikalisch miteinander verbunden. Als Protokoll wird bspw. das Media Redundancy Protocol (MRP) oder das Rapid Spanning Tree Protocol (RSTP) eingesetzt. MRP und RSTP erlauben die Kompensation des Ausfalls eines Kopplungselementes oder einer unterbrochenen Leitung zwischen zwei Kopplungselementen. Dem Redundanzverfahren liegt dabei das Prinzip zugrunde, dass beim Ausfall oder der Unterbrechung eines eingerichteten Kommunikationspfads die Kommunikation über einen alternativen Kommunikationspfad, der als Redundanzpfad bezeichnet wird, fortgesetzt wird. MRP und RSTP stellen eine Redundanz auf Layer 2 des OSI-Referenzmodells zur Verfügung.

In einem Kommunikationsnetzwerk sind jedoch nicht nur solche Fehler problematisch, welche zum Ausfall eines eingerichteten Kommunikationspfades führen, sondern auch solche, bei denen in dem Kommunikationsnetzwerk übertragene Telegramme (auch Nachrichten genannt) verloren gehen oder während der Übertragung verändert werden. Solche Kommunikationsstörungen können unter ungünstigen Umständen zu einem Totalausfall des Kommunikationsnetzwerks führen.

Es ist Aufgabe der vorliegenden Erfindung, ein Verfahren anzugeben, mit dem auf einfache Weise die Verfügbarkeit eines Kommunikationsnetzwerkes erhöht werden kann. Es ist weiter Aufgabe der vorliegenden Erfindung, ein Kopplungselement anzugeben, mit welchem eine erhöhte Verfügbarkeit eines Kommunikationsnetzwerks ermöglicht wird.

Diese Aufgaben werden gelöst durch ein Verfahren gemäß den Merkmalen des Patentanspruches 1, ein Kopplungselement gemäß den Merkmalen des Patentanspruches 12 und ein Kommunikationsnetzwerk gemäß den Merkmalen des Patentanspruches 14. Vorteilhafte Ausgestaltungen ergeben sich aus den abhängigen Patentansprüchen.

Die Erfindung schafft ein Verfahren zum Erhöhen der Verfügbarkeit eines Kommunikationsnetzwerks, in dem eine Anzahl an Kopplungselementen über jeweilige Koppelports physikalisch miteinander verbunden ist, wobei die Anzahl an Kopplungselementen dazu ausgebildet ist, an einem Redundanzverfahren zur Übertragung von Daten teilzunehmen. Die Kopplungselemente können bspw. in Ring-Topologie physikalisch miteinander verbunden sein, wie diese von MRP unterstützt wird. Die Kopplungselemente können aber auch in einer beliebigen anderen Art und Weise physikalisch miteinander verbunden sein, so dass das Redundanzverfahren bspw. gemäß RSTP durchgeführt wird.

Erfindungsgemäß nehmen die Kopplungselemente eine Überprüfung vor, ob über ihre Koppelelemente gesendete und/oder empfangene Telegramme einen die Telegrammübertragung betreffenden Fehler aufweisen oder ob der Betrieb der Koppelelemente einen Fehler umfasst. Die Kopplungselemente deaktivieren beim Vorliegen eines Kriteriums für den Fehler einen der Koppelports selbsttätig, wodurch das Redundanzverfahren für die Übertragung von Daten aktiviert wird und die weitere Übertragung von Telegrammen in dem Kommunikationsnetzwerk über einen eingerichteten Redundanzpfad erfolgt.

Die Erfindung schafft weiter ein Kopplungselement für ein Kommunikationsnetzwerk, bei dem eine Anzahl an Kopplungselementen über jeweilige Koppelports physikalisch miteinander verbunden ist, wobei das Kopplungselement dazu ausgebildet ist, an einem Redundanzverfahren zur Übertragung von Daten teil zu nehmen und wobei dieses ferner dazu ausgebildet ist, das erfindungsgemäße Verfahren auszuführen.

Bei dem erfindungsgemäßen Verfahren wird nicht nur durch solche Fehler, welche die Unterbrechung oder den Ausfall eines Kommunikationspfades nach sich ziehen, der Redundanzpfad aktiviert, sondern auch durch solche Fehler, die innerhalb eines jeweiligen Kopplungselements detektiert werden. Dies sind bspw. fehlerhafte Telegramme. Diese können bspw. aufgrund eines Fehlers einer Kommunikationsverbindung zwischen zwei Kopplungselementen oder aufgrund eines Fehlers des sendenden Kopplungselementes entstehen. Manche der Fehler sind dabei derart, dass die Stabilität des gesamten Kommunikationsnetzwerks in Mitleidenschaft gezogen werden kann.

Die Entdeckung des Ursprunges solcher Fehler ist in üblichen Kommunikationsnetzwerken nicht oder nur mit hohem Aufwand möglich. In erfindungsgemäßer Weise reagieren die erfindungsgemäßen Kopplungselemente bei der Detektion solcher Fehler derart, dass sie einen der Koppelports selbststätig deaktivieren. Hierdurch wird das Redundanzverfahren für die Übertragung von Daten aktiviert, was üblicherweise auch mit einer Signalisierung des Fehlers einhergeht. Das Redundanzverfahren kann bspw. durch eine Redundanzmanagementeinheit aktiviert werden, welche die Leitungsunterbrechung durch die Deaktivierung des Koppelports detektiert. Eine solche Redundanzmanagementeinheit ist bei MRP als logische Funktion in einem Kopplungselement implementiert. Bei RSTP ist keine gesonderte Redundanzmanagementeinheit vorgesehen. Stattdessen ist dieses Kommunikationsnetzwerk selbstorganisierend, da jedes Kopplungselement eine Redundanzsteuereinheit (RSTP Bridge) umfasst. Trotz des Verlustes der Redundanz kann die Verfügbarkeit des Kommunikationsnetzwerks erhöht werden. Das Kommunikationsnetzwerk läuft über den Redundanzpfad weiter. Allerdings macht das Kommunikationsnetzwerk durch die Mechanismen des Redundanzverfahrens auf den Fehler aufmerksam, so dass dieser bspw. durch den Betreiber des Kommunikationsnetzwerks behoben werden kann.

Zweckmäßigerweise wird mit der Deaktivierung des Koppelports der Fehler signalisiert. Die Signalisierung kann in der einfachsten Ausgestaltung bspw. mittels einer Kontrollleuchte oder einer Email erfolgen, welche einem Administrator einen Fehler anzeigt. Die Signalisierung des Fehlers kann dabei zeitgleich mit der Deaktivierung, zeitlich vor der Deaktivierung oder zeitlich nach der Deaktivierung des Koppelports erfolgen.

In einer bevorzugten Ausgestaltung wird ein den Fehler signalisierendes Telegramm an eine Redundanzmanagementeinheit übertragen. Das Telegramm beschreibt bspw. den auftretenden Fehler, z.B. unter Verwendung vorgegebener Kennzeichner. Ebenso umfasst das Telegramm vorzugsweise einen eindeutigen Kennzeichner desjenigen Kopplungselementes, welches die selbsttätige Deaktivierung des Koppelports veranlasst hat. Die gleichen Informationen können z.B. auch in einer Email enthalten sein.

Es ist weiter bevorzugt, wenn zur Überprüfung, ob ein Fehler vorliegt, ein interner Fehlerzähler der Kopplungselemente ausgelesen wird. Hierdurch lässt sich das erfindungsgemäße Verfahren auf besonders einfache Weise implementieren, da derartige interne Fehlerzähler bereits in herkömmlichen Kopplungselementen vorgesehen sind. Die Kopplungselemente müssen darüber hinaus noch derart abgewandelt werden, dass nach einem Auslesen und Auswerten des Fehlerzählers die selbsttätige Deaktivierung des Koppelports vorgenommen wird.

Es ist insbesondere vorgesehen, dass als Kriterium für einen Fehler ein Maß für die Häufigkeit des Auftretens eines bestimmten Fehlers und/oder mehrerer unterschiedlicher Fehler verwendet wird. In einer weiteren bevorzugten Ausgestaltung wird das Maß für die Häufigkeit des Auftretens eines Fehlers in Abhängigkeit der physikalischen Übertragungseigenschaften einer Verbindung zwischen zwei Kopplungselementen gewählt. Beispielsweise dürfen bei der Verwendung optischer Leiter zur Verbindung zweier Kopplungselemente Übertragungsfehler nicht auftreten. Somit ist bereits ein einziger Fehler, d.h. ein einziger Eintrag in den Fehlerspeicher, ausreichend, um die Deaktivierung des Koppelports vorzunehmen. Erfolgt die Signalübertragung zwischen zwei Kopplungselementen hingegen über elektrische Leitungen, so können unter Umständen mehrere Fehler erlaubt sein, bis der Koppelport deaktiviert wird.

Es ist weiterhin bevorzugt, wenn als Fehler von den Kopplungselementen einer oder mehrerer der nachfolgenden Fehler überwacht werden: Checksummen (CRC - Cyclic Redundancy Check), Jabber, Kollisionen bei der Übertragung von Telegrammen, Größe der Telegramme, Link-Up/Link-Down-Meldungen, Überlasten. Prinzipiell werden von den Kopplungselementen all diejenigen Fehler überwacht, welche keine physikalischen Verbindungsfehler zwischen den Koppelports zweier Kopllungselemente, bspw. Leitungsbruch, darstellen. Die von den Kopplungselementen überwachten Fehler können sich dabei je nach verwendeter Verbindungstechnologie (optische Übertragung oder elektrische Signalübertragung) unterscheiden. Beispielsweise werden bei der Verwendung optischer Übertragungsleiter Checksummen überwacht.

Gemäß einer weiteren zweckmäßigen Ausgestaltung werden die auf Fehler überprüften Koppelports im Vollduplex-Betrieb betrieben. Zur Verbindung zweier Kopplungselemente werden vorzugsweise Lichtwellenleiter eingesetzt. Ebenso können elektrische Leitungen, bspw. Kupferverbindungen, zur Verbindung zweier Kopplungselemente herangezogen werden.

Es ist weiterhin zweckmäßig, wenn sich ein Kopplungselement vollständig selbst deaktiviert, wenn der Fehler ein interner Firmware-Fehler des Kopplungselements ist. Bei einem Firmware-Fehler kann ein bestimmungsgemäßer Betrieb des Kopplungselementes nicht sichergestellt werden. Durch die vollständige Deaktivierung wird ebenfalls das eingangs beschriebene Redundanzverfahren gestartet, wodurch auch der Fehler des Kopplungselementes signalisiert wird.

In einer weiteren bevorzugten Ausgestaltung umfassen die Kopplungselemente jeweils eine Mehrzahl an weiteren Ports zum Anschluss von Teilnehmern des Kommunikationsnetzwerks, wobei zusätzlich die weiteren Ports auf Fehler überprüft werden. Durch die Überprüfung der Koppelports auf Fehler können die Kopplungselemente, die die Kopplungselemente verbindenden Leitungen sowie etwaiger Verbindungen auf Fehler überprüft werden. Werden zusätzlich oder alternativ auch die weiteren Ports auf Fehler überprüft, so können auch Fehler in den Teilnehmern, den die Teilnehmer mit einem Kopplungselement verbindenden Leitungen sowie Verbindern auf Fehler überprüft werden.

Ein erfindungsgemäßes Kommunikationsnetzwerk umfasst zumindest ein erfindungsgemäßes Kopplungselement.

Die Erfindung wird nachfolgend näher anhand eines Ausführungsbeispiels beschrieben. Die einzige Figur zeigt in schematischer Darstellung ein erfindungsgemäßes Kommunikationsnetzwerk.

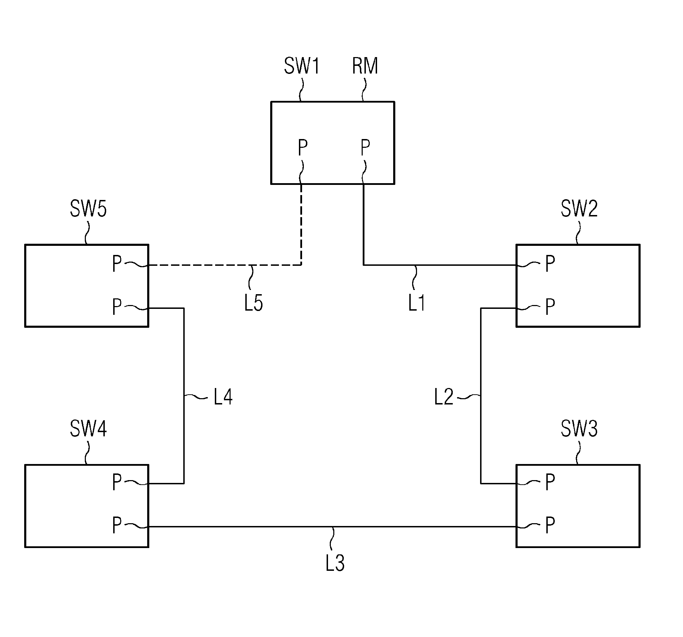

Das dargestellte, auf dem Datennetzstandard Ethernet basierende Kommunikationsnetzwerk umfasst beispielhaft fünf Kopplungselemente SW1, ..., SW5, die über jeweilige Koppelports P in einer Ring-Topologie physikalisch miteinander verbunden sind. In der Praxis kann das Kommunikationsnetz wesentlich mehr Kopplungselemente umfassen. Die Kopplungselemente werden auch als Switches bezeichnet. Ethernet erlaubt nur einen einzigen, also eindeutigen Datenpfad zwischen zwei beliebigen Teilnehmern. Werden die Kopplungselemente SW1, ..., SW5, wie in Fig. 1 dargestellt, über Leitungen L1, ..., L4 über eine Linienstruktur miteinander verbunden und werden weiterhin die beiden Kopplungselemente SW1, SW5 an den Enden der Linie miteinander verbunden, dann entsteht die gezeigte Ringstruktur.

Prinzipiell gibt es zwei Pfade zwischen zwei beliebigen Teilnehmern, die an unterschiedlichen Kopplungselementen angeschlossen sind. Die Teilnehmer sind in bekannter Weise an weiteren, nicht dargestellten Ports angeschlossen. Diese stellen Recheneinheiten, Sensoren oder Aktoren dar. Da im Ethernet zwei Kommunikationspfade nicht zulässig sind, wird die Verbindung im Ring auf der logischen Ebene abgeschaltet. Dies ist in Fig. 1 durch die gestrichelt dargestellte Leitung L5 illustriert. Dies bedeutet, zwar ist die Verkabelung in dem Ring tatsächlich vorhanden, von der Struktur entspricht das Kommunikationsnetzwerk jedoch einer Linie.

Jedes der Kopplungselemente SW1, ..., SW5 ist dazu ausgebildet, an einem Redundanzverfahren zur Übertragung von Daten teilzunehmen. Im dargestellten Ausführungsbeispiel wird als Redundanzverfahren das bekannte Media Redundancy Protocol (MRP) eingesetzt. Bei Verwendung der Ringredundanz HSR kann auch die redundante Kopplung über die Standby Kopplung zum Einsatz kommen. Alternativ könnte auch das Rapid Spanning Tree Protokoll (RSTP) zum Einsatz kommen, wobei die Kopplungselemente dann auch in einer anderen Topologie, z.B. als vermaschtes Netz, verschaltet sein können.

Das MRP ist ein Protokoll für hochverfügbare Kommunikationsnetzwerke, wie bspw. für kritische Automatisierungsanwendungen. Die hohe Verfügbarkeit wird dabei durch Redundanz sichergestellt. Das Funktionsprinzip von MRP basiert darauf, Einzelausfälle der Kopplungselemente SW1, ..., SW5 in der Ring-Topologie zu kompensieren. Hierzu umfasst beispielhaft das Kopplungselement SW1 eine Redundanzmanagementeinheit RM, welche über eine Leitung L5 einen Kommunikationsring zwischen den Kopplungselementen SW1 und SW5 schließt.

Im Normalbetrieb überprüft die Redundanzmanagementeinheit RM durch spezielle Testpakete die Durchgängigkeit des Rings. Hierzu wird von dem Kopplungselement SW1 über die Leitung L1 ein Testpaket an das Kopplungselement SW2 übertragen. Dieses leitet das Testpaket über die Leitung L2 an das Kopplungselement SW3 weiter, usw. Schließlich wird das Testpaket von dem Kopplungselement SW5 über die physikalisch vorhandene Leitung L5 weiter an die Redundanzmanagementeinheit RM des Kopplungselementes SW1 übertragen. Die Redundanzmanagementeinheit leitet keine Pakete weiter und verhindert damit, dass diese endlos in dem Kommunikationsring zirkulieren. Die Durchgängigkeit des Kommunikationsrings wird auch in entgegengesetzter Richtung überprüft.

Fällt eines der Kopplungselemente SW1, ..., SW5 oder eine der Kommunikationsleitungen L1, ..., L5 aus, so werden die auf einem Kopplungsport von der Redundanzmanagementeinheit RM ausgesendeten Testpakete am anderen Port des die Redundanzmanagementeinheit aufweisenden Kopplungselementes SW1 nicht mehr empfangen. Die Redundanzmanagementeinheit RM leitet von nun an die Datenpakete in beiden Richtungen, d.h. über L1 und L5, weiter und informiert die Kopplungselemente SW2, ..., SW4 über die Topologie-Änderung. Infolge dessen übertragen diese Kopplungselemente ihre Datenpakete bzw. Telegramme nicht mehr über den unterbrochenen Pfad, sondern über die Redundanzmanagementeinheit RM. Damit können dann, trotz Ausfall einer Verbindung, alle Teilnehmer miteinander Daten austauschen.

Die Verfügbarkeit des Kommunikationsnetzwerks wird jedoch nicht nur durch den Ausfall eines der Kopplungselemente SW1, ..., SW5 oder einer der Leitungen L1, ..., L4 beeinträchtigt. Stattdessen können auch fehlerhaft in dem Kommunikationsnetzwerk übertragene Telegramme zwischen zwei Teilnehmern bzw. zwei Kopplungselementen in ungünstigen Fällen zu einer Überlast und damit einer reduzierten Verfügbarkeit des Kommunikationsnetzwerks führen. Die Kopplungselemente SW1, ..., SW5 sind daher eingerichtet, eine Überprüfung vorzunehmen, ob über ihre Koppelports und/oder weiteren Ports gesendete und/oder empfangene Telegramme einen die Telegrammübertragung betreffenden Fehler aufweisen. Liegt ein solcher Fehler vor, so sind die Kopplungselemente SW1, ..., SW5 dazu ausgebildet, einen ihrer Koppelports P selbsttätig zu deaktivieren. Hierdurch wird das beschriebene Redundanzverfahren für die Übertragung von Daten durch die Redundanzmanagementeinheit RM aktiviert. Die weitere Übertragung von Telegrammen in dem Kommunikationsnetzwerk erfolgt dann über einen Redundanzpfad, welcher auch die vorher logisch abgeschaltete Leitung L5 nutzen kann.

Diesem Vorgehen liegt die Überlegung zugrunde, dass jedes Kopplungselement SW1, ..., SW5 Informationen über den Zustand seiner Koppelports und/oder weiteren Ports hat. Die Koppelports P arbeiten im Vollduplex-Verfahren. Selbst bei einer 100%-Buslast darf es bei diesen zu keinen Telegrammverfälschungen und damit -verlusten kommen. Das Auftreten fehlerhaft empfangener Telegramme ist durch die Auswertung interner Fehlerzähler der Kopplungselemente SW1, ..., SW5 möglich. Das Vorhandensein eines Eintrags im internen Fehlerzähler signalisiert somit ein Problem innerhalb des Kommunikationsnetzwerks. Der Fehler kann dabei derart sein, dass eine Datenübertragung innerhalb des Kommunikationsnetzwerks noch möglich ist. Ein Reagieren auf den Fehler wird durch das Aktivieren des Redundanzverfahrens ermöglicht, indem durch das Kopplungselement, das den Fehler detektiert, einer seiner Kopplungsports deaktiviert wird.

Als Fehler können bspw. eine Checksumme (CRC), die Größe der übertragenen Telegramme sein, Jabber oder Telegramm-Kollisionen. Ebenso kann ein Wackelkontakt durch das Auftreten von Link-Up/Link-down-Meldungen detektiert werden. Aus Link-Up/Link-Down-Meldungen resultieren Fehlereinträge, welche infolge eines Wackelkontaktes auftreten. Bei einem Wackelkontakt wird abwechselnd eine Meldung erzeugt, dass die Verbindung zwischen dem Kopplungsport und einem Kabel funktioniert (Link-Up) oder die Verbindung nicht funktioniert (Link-Down). Ein solcher Fehler kann bspw. die Folge eines Lötfehlers in dem Kopplungselement sein.

Um das Auffinden der den Fehler verursachenden Komponente zu erleichtern, ist weiterhin vorgesehen, dass mit der Deaktivierung eines der Koppelports der Fehler signalisiert wird. Dies kann bspw. durch einen Eintrag in ein Event-Log durch eine Kontrollleuchte, eine E-Mail und dergleichen geschehen. Ebenso kann vorgesehen sein, ein den Fehler signalisierendes Telegramm an die Redundanzmanagementeinheit oder eine andere Kontrollinstanz zu übertragen, welche den Fehler auswerten kann.

Die die Kopplungselemente SW1, ..., SW5 miteinander verbindenden Leitungen L1, ..., L5 sind wahlweise optische Leiter oder elektrische Leiter, welche im Vollduplex-Modus betrieben werden. In Abhängigkeit der physikalischen Übertragungseigenschaften, einer Verbindung zwischen zwei Kopplungselementen (d.h. einer optischen Signalübertragung oder einer elektrischen Signalübertragung), kann als Kriterium für einen auftretenden Fehler ein unterschiedliches Maß für die Häufigkeit des Auftretens eines bestimmten Fehlers oder mehrerer unterschiedlicher Fehler verwendet werden. So kann das einmalige Auftreten eines bestimmten Fehlers bei der Verwendung von Lichtwellenleitern bereits zu einer Deaktivierung eines der Koppelports führen, während bei der Verwendung elektrischer Signalleitungen der gleiche Fehler mehrmalig auftreten muß. Hierdurch wird den unterschiedlichen Übertragungseigenschaften von Leitungen Rechnung getragen.

Auf einen Fehler kann auch dann geschlossen werden, wenn verschiedene Ereignisse miteinander in Beziehung gesetzt werden. Beispielsweise kann eine Bilanz von empfangenen Multicast-Telegramen und gesendeten Multicast-Telegrammen an dem Kopplungsport überwacht werden. die an einem Kopplungsport in Ring-Topologie empfangenen Multicast-Telegramme müssen am anderen Kopplungsport eines jeweiligen Kopplungselements gesendet werden.

Die Kopplungselemente können in einer weiteren Ausgestaltung auch dazu ausgebildet sein, sich selbst zu überwachen. Tauchen bspw. interne Firmware-Systemfehler in einem Kopplungselement auf, so werden aktiv am Redundanzverfahren teilnehmende Kopplungselemente (z.B. der Redundanzmanager, Standby Master, Standby Slave) vollständig deaktiviert, d.h. sämtliche Ports werden deaktiviert. Dies hat zur Folge, dass sämtliche Kopplungsports deaktiviert werden, wodurch das Redundanzverfahren ebenfalls aktiviert wird. Ein interner Firmware-Fehler eines Kopplungselementes hat bspw. zur Folge, dass Schnittstellen nicht verfügbar sind oder Daten nicht gelesen oder in einen Speicher geschrieben werden können. Ein bestimmungsgemäßer Betrieb des Kommunikationsnetzwerks kann durch ein derartiges Kopplungselement beeinträchtigt werden.

Die Überwachung durch die Kopplungselemente ist nicht ausschließlich auf Kopplungsports, d.h. solche Ports beschränkt, welche Kopplungselemente miteinander verbinden. Die Überwachung kann ebenfalls auf weitere Ports, an denen Teilnehmer des Kommunikationsnetzwerks angeschlossen sind, erweitert werden. Zweckmäßigerweise sind die Teilnehmer dann im Vollduplex-Modus an die Kopplungselemente angebunden. Wird für einen solchen weiteren Port ein Fehler detektiert, so braucht in diesem Fall nicht notwendigerweise einer der Kopplungsports deaktiviert werden. Stattdessen ist es ausreichend, einen Fehler zu signalisieren.

## Patentansprüche

1. Verfahren zum Erhöhen der Verfügbarkeit eines Kommunikationsnetzwerks, in dem eine Anzahl an Kopplungselementen (SW1, ..., SW5) über jeweilige Koppelports (P) physikalisch miteinander verbunden ist, wobei die Anzahl an Kopplungselementen (SW1, ..., SW5) dazu ausgebildet ist, an einem Redundanzverfahren zur Übertragung von Daten teilzunehmen, bei dem
- die Kopplungselemente (SW1, ..., SW5) eine Überprüfung vornehmen, ob über ihre Koppelports (P) gesendete und/oder empfangene Telegramme einen die Telegrammübertragung betreffenden Fehler aufweisen oder ob der Betrieb der Koppelelemente (SW1, ..., SW5) einen Fehler umfasst; und
- die Kopplungselemente (SW1, ..., SW5) beim Vorliegen eines Kriteriums für den Fehler einen der Koppelports (P) selbsttätig deaktivieren, wodurch das Redundanzverfahren für die Übertragung von Daten aktiviert wird und die weitere Übertragung von Telegrammen in dem Kommunikationsnetzwerk über einen Redundanzpfad erfolgt.

2. Verfahren nach Anspruch 1, bei dem mit der Deaktivierung des Koppelports (P) der Fehler signalisiert wird.

3. Verfahren nach Anspruch 2, bei dem ein den Fehler signalisierendes Telegramm an eine Redundanzmanagementeinheit (RM) übertragen wird.

4. Verfahren nach einem der vorhergehenden Ansprüche, bei dem zur Überprüfung, ob ein Fehler vorliegt, ein interner Fehlerzähler der Kopplungselemente (SW1, ..., SW5) ausgelesen wird.

5. Verfahren nach Anspruch 4, bei dem als Kriterium für einen Fehler ein Maß für die Häufigkeit des Auftretens eines bestimmten Fehlers und/oder mehrerer unterschiedlicher Fehler verwendet wird.

6. Verfahren nach Anspruch 5, bei dem das Maß für die Häufigkeit des Auftretens eines Fehlers in Abhängigkeit der physikalischen Übertragungseigenschaften einer Verbindung zwischen zwei Kopplungselementen (SW1, ..., SW5) gewählt wird.

7. Verfahren nach einem der vorhergehenden Ansprüche, bei dem als Fehler von den Kopplungselementen (SW1, ..., SW5) einer oder mehrerer der nachfolgenden Fehler überwacht werden: Checksummen, Jabber, Kollisionen bei der Übertragung von Telegrammen, Größe der Telegramme, Link-Up/Link-Down-Meldungen, Überlast.

8. Verfahren nach einem der vorhergehenden Ansprüche, bei dem als Fehler solche Fehler berücksichtigt werden, die keine Verbindungsunterbrechung einer Verbindung zwischen zwei Kopplungselementen (SW!, ..., SW5) hervorrufen.

9. Verfahren nach einem der vorhergehenden Ansprüche, bei dem die auf Fehler überprüften Koppelports (P) im Vollduplex-Betrieb betrieben werden.

10. Verfahren nach einem der vorhergehenden Ansprüche, bei dem sich ein Kopplungselement (SW1, ..., SW5) vollständig selbst deaktiviert, wenn der Fehler ein interner Firmware-Fehler des Kopplungselements (SW1, ..., SW5) ist.

11. Verfahren nach einem der vorhergehenden Ansprüche, bei dem die Kopplungselemente (SW1, ..., SW5) jeweils eine Mehrzahl an weiteren Ports zum Anschluss von Teilnehmern des Kommunikationsnetzwerks umfassen, wobei zusätzlich die weiteren Ports auf Fehler überprüft werden.

12. Kopplungselement für ein Kommunikationsnetzwerk, bei dem eine Anzahl an Kopplungselementen (SW1, ..., SW5) über jeweilige Koppelports (P) physikalisch miteinander verbunden ist, wobei das Kopplungselement (SW1, ..., SW5) dazu ausgebildet ist, an einem Redundanzverfahren zur Übertragung von Daten teilzunehmen, und wobei dieses ferner dazu ausgebildet ist, das Verfahren nach Anspruch 1 auszuführen.

13. Kopplungselement nach Anspruch 12, bei dem dieses weitere Mittel zur Ausführung des Verfahrens nach einem der Ansprüche 2 bis 11.

14. Kommunikationsnetzwerk mit zumindest einem Kopplungselement nach einem der Ansprüche 12 oder 13.
